# EUROPEAN PATENT APPLICATION

(11) **EP 4 645 402 A1**
(43) Date of publication of application: **05.11.2025**
(21) Application number: 24843490.4
(22) Date of filing: 17.07.2024
(51) Int. Cl.: H01M 4/04, G01N 21/89, G01N 21/88

(54) **METHOD FOR GENERATING ROLL MAP**

(30) Priority: 18.07.2023 KR 20230092817
(71) Applicant: LG Energy Solution, Ltd., Seoul 07335 (KR)
(72) Inventor: SHIN, Jong Kwon, Daejeon 34122 (KR); KIM, June Hee, Daejeon 34122 (KR); SIM, Min Kyu, Daejeon 34122 (KR); KOH, Jee Yeon, Daejeon 34122 (KR); KIM, Min Su, Daejeon 34122 (KR); PARK, Jong Seok, Daejeon 34122 (KR)
(74) Representative: BCKIP Part mbB
(86) International application number: PCT/KR2024/010243
(87) International publication number: WO 2025/018775

(57) **Abstract**

A method for generating a roll map includes: coating, with electrode slurry, a first electrode sheet unwound from a first electrode roll so as to form, thereon, a first coated part lane, a second coated part lane, a first uncoated part, and a second uncoated part; forming a first reference point on the first uncoated part and forming a second reference point on the second uncoated part; winding the first electrode sheet into a second electrode roll; detecting the first reference point of the second electrode sheet unwound from the second electrode roll so as to collect first reference point data that indicate coordinates of the first reference point in the second electrode sheet; and generating, on the basis of the first reference point data, second reference point data that indicate coordinates of the second reference point in the second electrode sheet.

## Description

### [Technical Field]

The present disclosure relates to a roll map generating method. The present application claims the benefit of priority on Korean Patent Application No. 10-2023-0092817, filed on July 18, 2023, the entire contents of which are incorporated herein by reference.

### [Background]

A secondary battery can be charged and discharged a plurality of times unlike a primary battery. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

A secondary battery is manufactured by an electrode process, an assembly process, and an activation process. Among these processes, the electrode process is a key process in determining the yield and performance of a battery cell. The electrode process may include a coating process, a roll press process, and a slitting process. In the coating process, an active material and an insulating material may be applied to a surface of a current collector. In the roll press process, an electrode may be pressed by press rolls. In the roll press process, a density, performance and surface quality of the electrode may be determined. In the slitting process, the electrode may be cut into a plurality of electrodes according to the design of the battery cell.

### [Summary]

The present disclosure is directed to providing a method of generating a roll map with reduced capital expenditure.

Example embodiments of the present disclosure provide a roll map generating method. The roll map generating method includes coating a first electrode sheet unwound from a first electrode roll with an electrode slurry to form a first coated lane, a second coated lane, a first uncoated part and a second uncoated part, forming a first datum point on the first uncoated part and a second datum point on the second uncoated part, winding the first electrode sheet into a second electrode roll, sensing the first datum point on the second electrode sheet unwound from the second electrode roll to collect first datum point data indicating a coordinate of the first datum point on the second electrode sheet, and generating second datum point data based on the first datum point data, the second datum point data indicating a coordinate of the second datum point on the second electrode sheet.

Each of the first and second datum points may include a first symbol indicating an orientation of the first or second datum point, a second symbol indicating a corresponding one of the first and second coated lanes, and a third symbol indicating a sequence number in which the first and second datum points are formed.

Each of the first and second datum points may include four symbols.

The forming of the first datum point on the first uncoated part and the second datum point on the second uncoated part may include collecting offset data including an offset that is a length of the first electrode sheet in a machine direction between the first datum point and the second datum point.

The second datum point data may be generated based on the first datum point data and the offset data.

The coordinate of the second datum point on the second electrode sheet may be calculated by performing an operation on the coordinate of the first datum point on the second electrode sheet and the offset.

The operation may include subtraction or addition.

The roll map generating method may further include winding the second electrode sheet into a third electrode roll, sensing the first datum point on the third electrode sheet unwound from the third electrode roll to collect third datum point data indicating a coordinate of the first datum point on the third electrode sheet, and generating fourth datum point data based on the third datum point data, the fourth datum point data indicating a coordinate of the third datum point on the third electrode sheet.

The fourth datum point data may be generated based on the third datum point data and the offset data.

The coordinate of the second datum point on the third electrode sheet may be calculated by performing an operation on the coordinate of the first datum point on the third electrode sheet and the offset.

The roll map generating method may further include cutting the third electrode sheet into a first individualized electrode sheet and a second individualized electrode sheet, the first individualized electrode sheet including the first coated lane and the first uncoated part and the second individualized electrode sheet including the second coated lane and the second uncoated part, and winding the first individualized electrode sheet into a first individualized electrode roll and the second individualized electrode sheet into a second individualized electrode roll.

The roll map generating method may further include generating roll maps of the first and second individualized electrode rolls based on the third datum point data and the fourth datum point data.

Each of the roll maps of the first and second individualized electrode rolls may include data about a corresponding one of the first coated lane and the second coated lane.

The first datum point and the second datum point may be formed by the same marker.

The first datum point may be formed by a first marker and the second datum point may be formed by a second marker.

According to example embodiments of the present disclosure, datum points of one of a plurality of uncoated parts may be sensed to generate datum point data of the sensed datum points, and datum point data including coordinates of datum points of each of the plurality of uncoated parts may be generated based the datum point data. Accordingly, datum point data can be collected and generated based on a relatively small number of optical character readers (OCRs), thereby reducing costs required to build a system for manufacturing a secondary battery.

Effects achievable from example embodiments of the present disclosure are not limited to the above-described effects, and other effects that are not described herein will be clearly derived and understood by those of ordinary skilled in the art to which the example embodiments of the present disclosure pertain from the following description. That is, unintended effects achieved when the example embodiments of the present disclosure are implemented are derivable by those of ordinary skilled in the art from the example embodiments of the present disclosure.

### [Brief Description of the Drawings]

FIG. 1 illustrates a secondary battery manufacturing system according to example embodiments.
FIG. 2 illustrates a coating device according to example embodiments.
FIG. 3 illustrates a first electrode sheet processed by a coating device.
FIG. 4 illustrates a roll pressing device according to example embodiments.
FIGS. 5 and 6 are plan views of a second electrode sheet.
FIG. 7 illustrates a slitting device according to example embodiments.
FIGS. 8 and 9 are plan views of a third electrode sheet.
FIG. 10 is a flowchart of a method of manufacturing a secondary battery according to example embodiments.

### [Detailed Description]

Hereinafter, embodiments of the present disclosure will be described in detail with reference to the accompanying drawings. Before describing embodiments of the present disclosure, the terms or expressions used in the present specification and claims should not be construed as being limited to as generally understood or as defined in commonly used dictionaries, and may be understood according to meanings and concepts corresponding to the present disclosure on the basis of the principle that the inventor(s) of the application may appropriately define the terms or expressions to optimally explain the present disclosure.

Therefore, embodiments set forth herein and configurations illustrated in the drawings are only examples of the present disclosure and do not reflect all the technical ideas of the present disclosure, and thus it should be understood that various equivalents and modifications that replace the configurations would have been made at the filing date of the present application.

Well-known configurations or functions related to describing the present disclosure may not be described in detail when it is determined that they would obscure the subject matter of the present disclosure due to unnecessary detail.

Because embodiments of the present disclosure are provided to more fully explain the present disclosure to those of ordinary skill in the art, the shapes, sizes, etc., of components illustrated in the drawings may be exaggerated, omitted, or schematically illustrated for clarity. Therefore, it should be understood that the sizes or proportions of components may not fully reflect the actual sizes or proportions thereof.

### (First Embodiment)

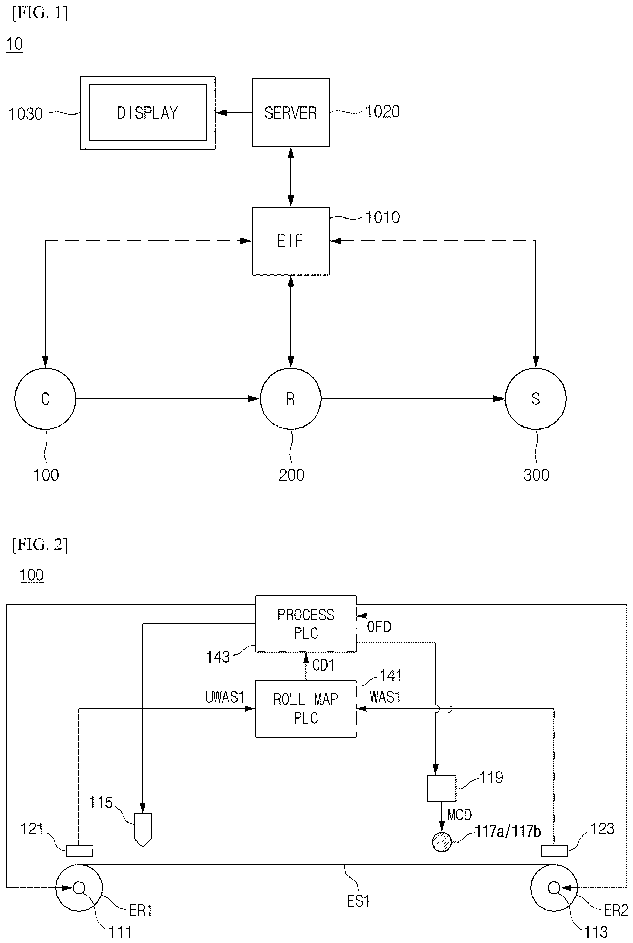

FIG. 1 illustrates a secondary battery manufacturing system 10 according to example embodiments.

Referring to FIG. 1, the secondary battery manufacturing system 10 may include a coating device 100, a roll pressing device 200, a slitting device 300, an equipment interface (EIF) 1010, and a server 1020 and a display device 1030.

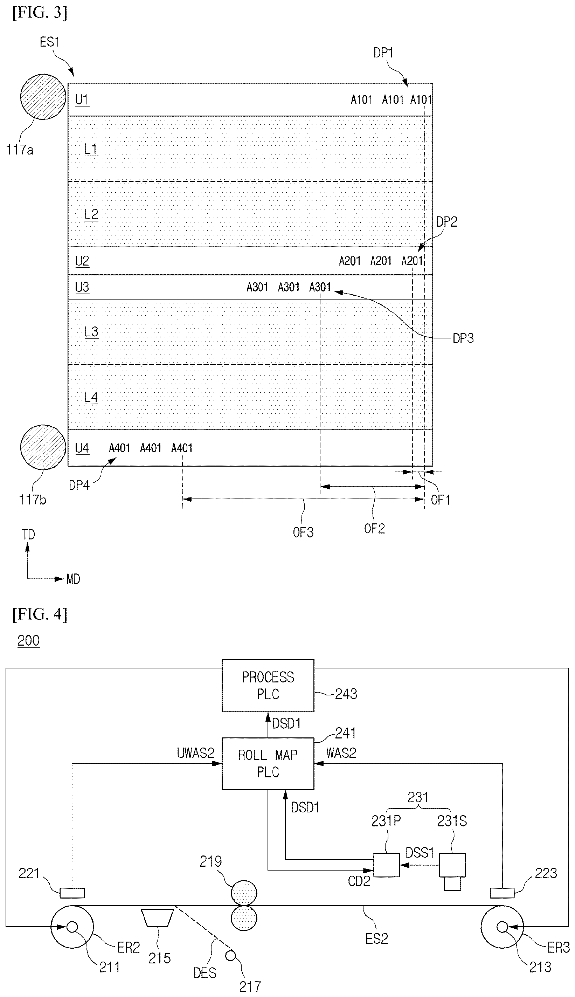

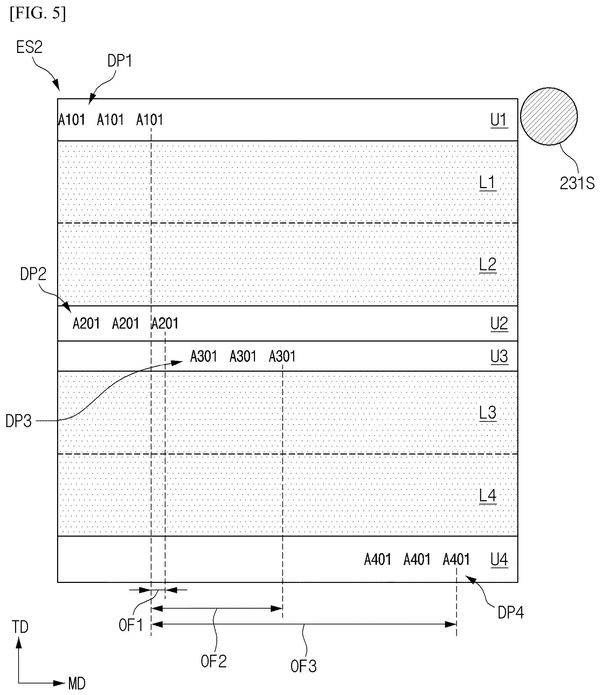

The secondary battery manufacturing system 10 may be configured to manufacture a battery cell (e.g., a cylindrical battery cell) by performing a series of roll-to-roll processes. An electrode sheet unwound from an input electrode roll may be processed by a die coater 123 (see FIG. 2) of the coating device 100, pressing rolls 219 (see FIG. 4) of the roll pressing device 200, or a slitting knife 315 (see FIG. 5) of the slitting device 300, and the processed electrode sheet may be wound into an electrode roll. Accordingly, each of operations performed by the coating device 100, the roll pressing device 200, and the slitting device 300 to produce electrodes of a secondary battery may be referred to as a roll-to-roll process.

The coating device 100 may perform the coating process on the electrode sheet. In the coating process, the electrode sheet may be coated with an electrode slurry. The electrode slurry may include an active material, a conductive agent, a binder, and a solvent. The electrode slurry may be prepared by dissolving the active material, the conductive agent, the binder, etc., in the solvent.

The roll pressing device 200 may perform the roll pressing process on the electrode sheet. In the roll pressing process, the electrode sheet coated with the electrode slurry may be passed through between the pressing rolls 219 (see FIG. 4). Through the roll pressing process, a surface of the electrode sheet may be planarized and a binding force between the active material on the electrode sheet and a current collector may be improved.

The slitting device 300 may perform the slitting process on the electrode sheet. The electrode sheet may be divided into a plurality of electrode sheets by the slitting process.

Electrode rolls completed by the slitting device 300 may be processed by a winding device or a notching device. Accordingly, a stack type electrode assembly or a cylindrical electrode assembly may be provided.

When the electrode sheet includes a defect, the defect of the electrode sheet may be scrapped. The defect of the electrode sheet may be scrapped by the roll pressing device 200 or a rewinding stage (not shown).

The EIF 1010 may be a device for communication between the server 1020 and process programmable logic controllers (PLCs) of manufacturing equipment. A process PLC 143 (see FIG. 2) of the coating device 100, a process PLC 243 (see FIG. 4) of the roll pressing device 200, and a process PLC 343 (see FIG. 5) of the slitting device 300 may communicate with the server 1020 through the EIF 1010. Accordingly, data of process events generated by the coating device 100, the roll pressing device 200, and the slitting device 300 may be transmitted to the server 1020.

The server 1020 may be configured to generate first to third roll maps including the data of the process events. Data of process events of a roll map may include values indicating the process events and coordinates matching the values. The coordinates may represent positions on an electrode. Accordingly, the roll map enables feedback, feedforward, and tracking of a secondary battery manufacturing process as described below.

Roll maps may be generated in units of lots. A lot is a production unit of a roll-to-roll process, and an electrode roll (or an electrode assembly roll) separated after a target winding length in each process is achieved is an example of a lot. Similarly, an electrode roll loaded on an unwinder in each process is an example of a lot. The server 1220 may generate and store a roll map of each of processes (e.g., the coating process, the roll pressing process, or the slitting process).

In a roll map, time series data constructed over time (i.e., according to the progress of a process) may be related to coordinate data collected based on the amount of movement (i.e., the amount of exhaustion or the amount of input) of an electrode sheet.

The manufacture of a secondary battery involves a series of different processes, and a leading process affects the following process. In this case, it is difficult to reflect time series data of the leading process in the following process when the time series data of the leading process does not directly match a real-world workpiece, an intermediate product, and a product. Hereinafter, correcting the following process based on data generated according to a result of the leading process may be referred to as feedforward.

Here, the workpiece may be an article provided as a result of each process, e.g., an electrode sheet on which the coating process, the roll press process, and the slitting process are performed. The intermediate product may include separators that are cut by the notching process, electrodes, or an assembly thereof (i.e., an electrode assembly). The intermediate product may be a structure including a housing and an electrode assembly included in the housing (in some cases, the structure further includes an electrolyte). The product may be an article processed by the activation process to be operable as a secondary battery. The above-described definitions of the workpiece, the intermediate product, and the product are definitions thereof only in one aspect, and thus should not be understood as excluding general definitions thereof.

Generally, process events occur as a result of performing a process, and thus data thereof is time series data. Accordingly, the data of the process events may include values indicating the events and time values matching the values.

For feedforward, time series data should be related to positions on workpieces, components, intermediate products, and products of the real world. Here, the feedforward may include controlling processing of an electrode sheet, based on a roll map generated in a preceding process. In the roll map, time series data may be related with coordinate data including coordinates of the positions on the workpieces, the components, the intermediate products, and the products of the real world. The roll map may provide matching between the time series data and the workpieces, the components, the intermediate products, and the products of the real world, based on the coordinate data. Accordingly, generation of the roll map and feedforward based on the roll map may improve the productivity and quality of the secondary battery manufacturing process by digitizing and objectifying aspects of a process that depend on an operator's discretion.

A roll map of a preceding lot may be used to improve a process for a following lot, and this operation may be referred to as process feedback. The process feedback using the roll map may include identifying process conditions and process parameters that cause problems and defects, based on data included in the roll map.

Furthermore, as described below, roll maps may be cumulatively generated for workpieces, intermediate products, and products of unit processes to track process history of products (e.g., battery cells, battery modules, or battery packs) on the market. For example, a battery cell may include a cell identifier (ID) on an electrode assembly or a case. The cell ID may include lot numbers and coordinate information of electrodes and a separator included in the battery cell. In other words, the cell ID may be related to a roll map of the electrodes and the separator included in the battery cell. Accordingly, when an event, e.g., a quality issue, occurs in the battery cell on the market, history data of the manufacture of the battery cell may be retrieved based on the cell ID.

According to example embodiments, the server 1020 may be a data processing system that supports all activities required to manage the manufacture of a secondary battery, such as work schedule management, work instructions, quality control, and work performance aggregation. The server 1020 may be, for example, a manufacturing execution system (MES). The server 1020 may be configured to perform inputting, processing, outputting, and communication of data necessary for the manufacture of electrodes, including the coating process, a press process, and a manufacturing process.

According to other example embodiments, the server 1020 may be configured to store and process raw measurement data. The server 1020 may manage the quality of processing the electrode sheet by continuously monitoring the processing of the electrode sheet based on the measurement data. According to example embodiments, the server 1020 may be a statical process controller (SPC). The server 1020 may collect and analyze manufacturing data in almost real time to identify problematic conditions in a timely manner and provide a notification to an operator before potential problems occur.

According to other example embodiments, the server 1020 may be, for example, a data warehouse, and store a roll map for a long period of time according to a product quality guarantee period and the like.

According to other example embodiments, the server 1020 may perform all functions of an MES, an SPC, and a data warehouse or be provided separately from the MES, the SPC, and the data warehouse to create a roll map.

FIG. 2 illustrates a coating device 100 according to example embodiments.

FIG. 3 illustrates a first electrode sheet ES1 processed by the coating device 100.

Referring to FIGS. 2 and 3, the coating device 100 may include an unwinder 111, a rewinder 113, a die coater 115, markers 117a and 117b, a controller 119, a first rotary encoder 121, a second rotary encoder 123, an inspection device 131, a roll map PLC 141, and a process PLC 143.

A first electrode roll ER1 may be loaded on the unwinder 111. The unwinder 111 may be configured to unwind the first electrode sheet ES1 from the first electrode roll ER1. The rewinder 113 may be configured to wind the first electrode sheet ES1 into a second electrode roll ER2. Accordingly, the first electrode sheet ES1 may be moved between the unwinder 111 and the rewinder 113.

The first electrode sheet ES1 may be wound into the second electrode roll ER2 and be cut and separated in a transverse direction TD after a certain winding length is reached. The separated second electrode roll ER2 is an article on which the coating process is completed and may be managed as a lot that is a unit of a production process.

The first rotary encoder 121 may be configured to sense the amount of the first electrode sheet ES1 unwound from the first electrode roll ER1 by the unwinder 111. Accordingly, the first rotary encoder 121 may be configured to generate an input amount signal UWAS1 indicating a length of the first electrode sheet ES1 unwound by the unwinder 111. The first rotary encoder 121 may be configured to transmit the input amount signal UWAS1 to the roll map PLC 141.

The second rotary encoder 123 may be configured to sense the amount of the first electrode sheet ES1 wound into the second electrode roll ER2 by the rewinder 113. Accordingly, the second rotary encoder 123 may be configured to generate an exhaustion amount signal WAS1 indicating a length of the first electrode sheet ES1 wound by the rewinder 113. The second rotary encoder 123 may be configured to transmit the exhaustion amount signal WAS1 to the roll map PLC 141.

The die coater 115 may be configured to coat the first electrode sheet ES1 with an electrode slurry containing an active material. When the first electrode sheet ES1 is a positive electrode current collector, an electrode slurry containing a positive electrode active material may be provided on the first electrode sheet ES1, and when the first electrode sheet ES1 is a negative electrode current collector, an electrode slurry containing a negative electrode active material may be provided on the first electrode sheet ES1.

The die coater 115 may form first to fourth coated lanes L1, L2, L3, and L4 (hereinafter, L1 to L4) on the first electrode sheet ES1. The first to fourth coated lanes L1 to L4 are parts of the first electrode sheet ES1 coated with the active material.

The first and second coated lanes L1 and L2 may be formed from the same slit of the die coater 115 and be connected to each other. The third and fourth coated lanes L3 and L4 may be formed from the same slit of the die coater 115 and be connected to each other.

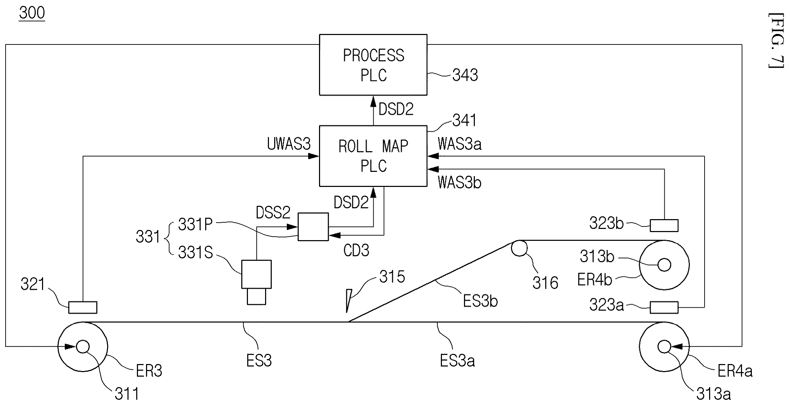

The first and second coated lanes L1 and L2 and the third and fourth coated lanes L3 and L4 may be separated by the slitting device 300 (see FIG. 7). That is, the first electrode sheet ES1 including the four coated lanes L1 to L4 may be cut into a plurality of individualized electrode sheets ES3a and ES3b (see FIG. 7) including only one of the first to fourth coated lanes L1-L4 by the slitting device 300 (see FIG. 7).

Each of the coated lanes L1 to L4 may extend in a machine direction MD of the first electrode sheet ES1. The plurality of coated lanes L1 to L4 may be spaced apart from one another in a transverse direction TD of the first electrode sheet ES1.

Each of first to fourth uncoated parts U1, U2, U3, U4 (hereinafter, U1 to U4) is a part of the first electrode sheet ES1 that is not coated with the active material. The first and fourth uncoated parts U1 and U4 may be at opposite ends of the first electrode sheet ES1 in the transverse direction TD. The first and fourth uncoated parts U1 and U4 may be spaced apart from each other with the first to fourth coated lanes L1 to L4 interposed therebetween. The second and third uncoated parts U2 and U3 may be interposed between the second and third coated lanes L2 and L3.

The first uncoated part U1 corresponds to the first coated lane L1, and the first uncoated part U1 and the first coated lane L1 may be included in the same electrode roll after the slitting process. The second uncoated part U2 corresponds to the second coated lane L2, and the second uncoated part U2 and the second coated lane L2 may be included in the same electrode roll after the slitting process. The third uncoated part U3 corresponds to the third coated lane L3, and the third uncoated part U3 and the third coated lane L3 may be included in the same electrode roll after the slitting process. The fourth uncoated part U4 corresponds to the fourth coated lane L4, and the fourth uncoated part U4 and the fourth coated lane L4 may be included in the same electrode roll after the slitting process.

Hereinafter, the technical idea of the present disclosure will be described with reference to the first electrode sheet ES1 including the four coated lanes L1 to L4 and the four uncoated parts U1 to U4. Those of ordinary skill in the art would be able to easily derive a method of generating a roll map for each process of an electrode sheet that includes two, three, or five or more coated lanes and uncoated parts, based on the description herein.

The roll map PLC 141 may be configured to collect coordinate data CD1 of the first electrode sheet ES1, based on the exhaustion amount signal WAS1 and/or the input amount signal UWAS1 of the first electrode sheet ES1. For example, the roll map PLC 141 may determine a moving distance of the first electrode sheet ES1, based on the exhaustion signal WAS1 of the first electrode sheet ES1. Accordingly, the roll map PLC 141 may be configured to determine a position of a part of the first electrode sheet ES1, which is to be wound by the rewinder 113, on the first electrode sheet ES1 at each point in time when an event occurs in the first electrode sheet ES1.

As another example, the roll map PLC 141 may determine the moving distance of the first electrode sheet ES1 based on the input amount signal UWAS1 of the first electrode sheet ES1 or determine the moving distance of the first electrode sheet ES1 based on each of the exhaust amount signal WAS1 and the input amount signal UWAS1. Hereinafter, as a non-limiting example, the technical idea of the present disclosure will be described with reference to an embodiment in which the roll map PLC 141 collects the coordinate data CD1 based on the exhaustion amount signal WAS1 of the first electrode sheet ES1.

The coordinate data CD1 may include coordinates matching each part of the first electrode sheet ES1. That is, each of arbitrary points on the first electrode sheet ES1 may match coordinates corresponding thereto. The coordinates may be one-dimensional (1D) quantities in a machine direction MD (or a longitudinal direction) of the first electrode sheet ES1, but are not limited thereto. The coordinates may be two-dimensional (2D) quantities in the machine direction MD of the first electrode sheet ES1 and the transverse direction TD of the first electrode sheet ES1.

According to example embodiments, the controller 119 may be configured to control the markers 117a and 117b based on the coordinate data CD1. According to example embodiments, the controller 119 may be configured to calibrate coordinates of the coordinate data CD1 based on an offset length of each of the markers 117a and 117b, generate a command MCD to control the markers 117a and 117b based on the calibrated coordinates, and transmit the command MCD to the markers 117a and 117b.

Here, the offset length of each of the markers 117a and 117b may be a length of the first electrode sheet ES1 between a part of the first electrode sheet ES1 sensed by the second rotary encoder 123 and a part of the first electrode sheet ES1 processed by the markers 117a and 117b. The controller 119 may be configured to transmit data of the operations of the markers 117a and 117b (i.e., data of the formation of first to fourth datum points DP1, DP2, DP3, and DP4 (hereinafter, referred to as DP1 to DP4)) to the process PLC 143.

The markers 117a and 117b may be, for example, printing devices. The markers 117a and 117b may be configured to form the first to fourth datum points DP1 to DP4 on the first electrode sheet ES1, based on a body including a product ID and specifications of a manufacturing recipe transmitted from the MES. The markers 117a and 117b may be configured to form the first to fourth datum points DP1 to DP4 on the first to fourth uncoated parts U1 to U4.

The first datum points DP1 may be formed on the first uncoated part U1, the second datum points DP2 may be formed on the second uncoated part U2, the third datum points DP3 may be formed on the third uncoated part U3, and the fourth datum points DP4 may be formed on the fourth uncoated part U4. The first to fourth datum points DP1 to DP4 may be formed on the first electrode sheet ES1 at predetermined intervals.

Based on the first to fourth datum points DP1 to DP4, other elements on the first electrode sheet ES1 may be located. The first to fourth datum points DP1 to DP4 may be used to calibrate coordinate data of elements on a roll map. For example, the first to fourth datum points DP1 to DP4 may be used to calibrate coordinates of a scrapped part of the second electrode sheet ES2 (i.e., a start coordinate and end coordinate of the scrapped part of the second electrode sheet ES2) by the roll press device 200 of FIG. 4 and to calibrate coordinates of a joint of the second electrode sheet ES2. As another example, the first to fourth datum points DP1 to DP4 may be used to calibrate coordinates formed by combining two or more second electrode rolls ER2.

The marker 117a may be of a fixed type, and the marker 117b may be of a movable type. The marker 117a may be configured to form the first datum points DP1 on the first uncoated part U1 of the first electrode sheet ES1 moved in the machine direction MD at a fixed position. The marker 117b may be configured to move in the transverse direction TD. The marker 117b may be configured to form the second to fourth datum points DP2, DP3, and DP4 on the second to fourth uncoated parts U2, U3, and U4.

The first to fourth datum points DP1 to DP4 may be formed repeatedly. As a non-limiting example, each of the first to fourth datum points DP1 to DP4 may be repeated, for example, three times. The first datum points DP1 including symbols 'A101' may be repeated on the first uncoated part U1 three times, the second datum points DP2 including symbols 'A201' may be repeated on the second uncoated part U2 three times, the third datum points DP3 including symbols 'A301' may be repeated on the third uncoated part U3 three times, and the fourth datum points DP4 including symbols 'A401' may be repeated on the fourth uncoated part U4 three times. According to example embodiments, the first to fourth datum points DP1 to DP4 are repeatedly formed, thereby preventing the entire set of datum points from being removed during partial scrapping of the electrode sheet or the notching process. The number of repetitions of the first to fourth datum points DP1 to DP4 may be one, two, four, or five or more.

The first datum points DP1 and the second datum points DP2 are formed substantially simultaneously but there may be an offset OF1 between the first datum points DP1 and the second datum points DP2 due to tolerance in the marking process. Because the third datum points DP3 are formed after the formation of the second datum points DP2, there may be an offset OF2 between the first datum points DP1 and the third datum points DP3. The offset OF2 may be greater than the offset OF1. Because the fourth datum points DP4 are formed after the formation of the third datum points DP3, there may be an offset OF3 between the first datum points DP1 and the fourth datum points DP4. The offset OF3 may be greater than the offset OF2.

Accordingly, collecting the data of the formation of the first to fourth datum points DP1 to DP4 by the markers 117a and117b may include collecting offset data OFD including the offsets OF1, OF2, and OF3. The offset data OFD may be collected by the controller 119. The controller 119 may be configured to transmit the offset data OFD to the process PLC 143. The offset data OFD may also be transmitted to the process PLC 143 through the roll map PLC 141.

According to example embodiments, each of the first to fourth datum points DP1 to DP4 may include a plurality of symbols. Here, the term "symbol" may be understood as a general term including signs, characters, marks, etc., that represent a particular idea. For example, each of the first to fourth datum points DP1 to DP4 may include a first symbol indicating an orientation of each of the first to fourth datum points DP1 to DP4 and an input direction of an electrode roll (e.g., an input direction of the second electrode roll ER2 of FIG. 4 and an input direction of a third electrode roll ER3 of FIG. 7), a second symbol indicating coated lanes corresponding to the first to fourth datum points DP1 to DP4 among the first to fourth coated lanes L1 to L4, and third and fourth symbols indicating a sequence number in which the first to fourth datum points DP1 to DP4 are formed.

As a non-limiting example, the first symbol of each of the first to fourth datum points DP1 to DP4 may be 'A'. The first symbol is not limited to the alphabet, and the first symbol of each of the first to fourth datum points DP1 to DP4 may include arbitrary signs, characters or marks identifying the orientation of the first symbol. The first symbol may be included in a different set from the second to fourth symbols. For example, when the second to fourth symbols include Arabic numerals, the first symbol may include arbitrary characters providing information about an orientation, e.g., alphabet including Greek, Latin, Mongolian, Armenian, N'Ko alphabet, Georgian alphabet, Braille, Cyrillic alphabet, Tifinagh alphabet, and Thaana alphabet, featural alphabet such as Hangul, Abjad such as Syriac, Arabic, and Hebrew, Abugida such as Gujarati, Nevanagari, Lao, Malayalam, Burmese, Sinhalese, Geez, Oriya, Canadian Aboriginal scripts, Kannada, Khmer, Tamil, Thai, Telugu, and Tibetan, and syllabary such as Cherokee syllabary and Ghana. Alternatively, the first symbol may be included in the same set as the second to fourth symbols. For example, the first symbol may include two or more consecutive Arabic numerals, such as 00, 11, 22, or 33.

An outer part of the first electrode roll ER1 put into the coating device 100 may be wound into an inner part of the second electrode roll ER2. Similarly, an inner part of the first electrode roll ER1 put into the coating device 100 may be wound into an outer part of the second electrode roll ER2. An outer part of the second electrode roll ER2 put into the roll pressing device 200 of FIG. 4 may be wound into an inner part of the third electrode roll ER3 (see FIG. 4). Similarly, an inner part of the second electrode roll ER2 put into the roll pressing device 200 of FIG. 4 may be wound into an outer part of the third electrode roll ER3 (see FIG. 4). In addition, the left and right sides of the second electrode sheet ES2 (see FIG. 4) and the third electrode sheet ES3 (see FIG. 7) may be inverted according to a method of loading and unwinding the second electrode roll ER2 and the third electrode roll ER3. Here, the machine direction MD may be parallel to an axis in which the left and right sides are inverted.

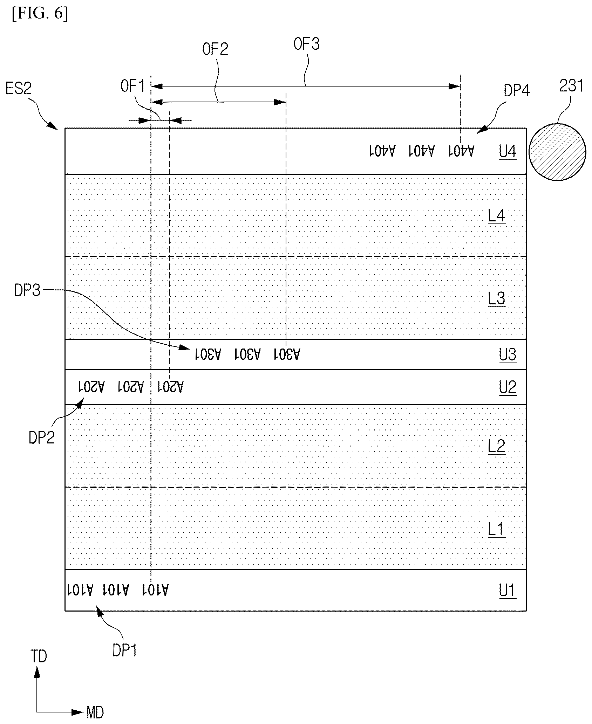

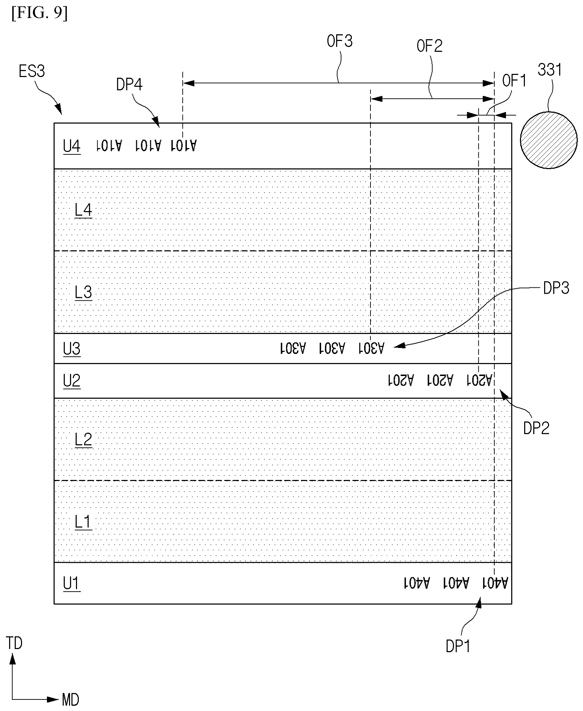

For example, in a second electrode sheet ES2 of FIG. 6 and a third electrode sheet ES3 of FIG. 9, the first to fourth datum points DP1 to DP4 may include an inverted first symbol 'A'. It may be determined based on an orientation of the inverted first symbol 'A' that the subsequent second to fourth symbols S2, S3, and S4 are inverted, and thus, the first to fourth symbols of each of the first to fourth datum points DP1 to DP4 may be accurately read out.

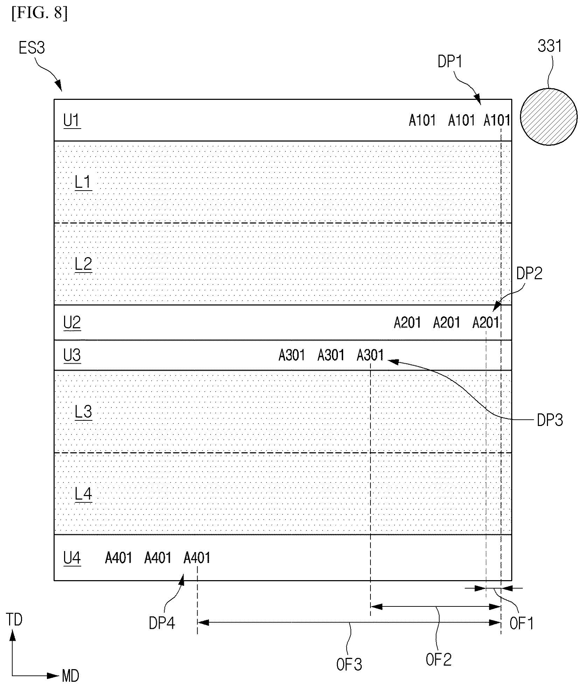

As another example, in a second electrode sheet ES2 of FIG. 5 and a third electrode sheet ES3 of FIG. 8, the first to fourth datum points DP1 to DP4 may include a non-inverted (i.e., upright) first symbol 'A'. It may be determined based on an orientation of the non-inverted first symbol 'A' that the subsequent second to fourth symbols S2, S3, and S4 are not inverted, and thus, the first to fourth symbols of each of the first to fourth datum points DP1 to DP4 may be accurately read out.

Furthermore, it may be determined, when the first symbol is identified, that the second symbol (i.e., a symbol indicating a corresponding one of the first to fourth coated lanes L1 to L4) is subsequent to the first symbol, the third symbol (i.e., a symbol indicating the tens digit of the sequence number) is subsequent to the second symbol, and the fourth symbol (i.e., a symbol indicating the ones digit of the sequence number) is subsequent to the third symbol. Accordingly, the second to fourth symbols of the first to fourth datum points DP1 to DP4 may be determined through identification of the first symbol by a datum point sensor 231 (see FIG. 4) or a datum point sensor 331 (see FIG. 7).

Here, preceding and following symbols are based on horizontal writing from left to right and may be opposite to preceding and following symbols based on the machine direction MD. That is, in the first datum points DP1, the first symbol 'A' precedes the second to fourth symbols '101' but the part of the first uncoated part U1 on which the second to fourth symbols '101' are formed may be wound by the rewinder 113 before the part of the first uncoated part U1 on which the first symbol 'A' is formed.

As a non-limiting example, the second symbol of each of the first to fourth datum points DP1 to DP4 may indicate a corresponding one of the first to fourth coated lanes L1 to L4. For example, the second symbol of the first datum points DP1 may be '1' indicating the first coated lane L1, the second symbol of the second datum points DP2 may be '2' indicating the second coated lane L2, the second symbol of the third datum points DP3 may be '3' indicating the third coated lane L3, and the second symbol of the fourth datum points DP4 may be '4' indicating the fourth coated lane L4. However, embodiments are not limited thereto, and the second symbol of each of the first to fourth datum points DP1 to DP4 may include an arbitrary sign indicating a corresponding one of the first to fourth coated lanes L1 to L4.

The third symbol of each of the first to fourth datum points DP1 to DP4 may represent the tens digit of the sequence number, and the fourth symbol S4 of each of the first to fourth datum points DP1 to DP4 may represent the ones digit of the sequence number. In FIG. 3, the third and fourth symbols of each of the first to fourth datum points DP1 to DP4 may be '01' indicating that the first datum points DP1 are datum points first formed on the first uncoated part U1, the second datum points DP2 are datum points first formed on the second uncoated part U2, the third datum points DP3 are datum points first formed on the third uncoated part U3, and the fourth datum points DP4 are datum points first formed on the fourth uncoated part U4.

However, the embodiment of FIG. 3 is only a non-limiting example, and those of ordinary skill in the art would be able to easily derive at an embodiment in which the first to fourth symbols of the first to fourth datum points DP1 to DP4 are arranged in an arbitrary permutation. In an arbitrary permutation, for example, the first sign may follow the second sign, the fourth sign may follow the first sign, and the third sign may follow the fourth sign. The arbitrary permutation of the first to fourth signs may include a total of twenty four arrangements, and those of ordinary skill in the art would be able to easily derive remaining twenty three arrangements based on the above description.

Furthermore, those of ordinary skill in the art would be able to easily derive an embodiment in which each of first to fourth datum points includes an additional symbol for designating a lane, an embodiment in which each of first to fourth datum points includes three or more symbols for designating a formed sequence number, and an embodiment in which a single symbol is configured to designate a lane and represent an orientation of each of first to fourth datum points. Although FIG. 3 illustrates only one side of the first electrode sheet ES1, the coating process may be performed on each of both sides of the first electrode sheet ES1, and the first to fourth datum points DP1 to DP4 may be formed on each of the both sides of the first electrode sheet ES1.

The process PLC 143 may be configured to transmit data of the operations of the markers 117a and 117b, which includes offset data OD, to the server 1020 (see FIG. 1) via the EIF 1010 (see FIG. 1). The server 1020 (see FIG. 1) may be configured to generate a first roll map of the second electrode roll ER2 processed by the coating device 100 based on the data of the operations of the markers 117a and 117b and data of additional process events.

Here, the data of the additional process events may include inspection data and measurement data of the first electrode sheet ES1. The measurement data may include a plurality of measured values expressed numerically. For example, the measurement data may include dimensional data of the first electrode sheet ES1 such as a thickness and width, data of a loading amount of a coating material on the first electrode sheet ES1, dimensional data such as a width of an insulating material on the coating material and an overlapping width between the coating material and the insulating material, mismatch data between the coated lanes on an upper surface of the first electrode sheet ES1 and coated lanes on a lower surface of the first electrode sheet ES1, and the like. Here, the loading amount is the amount of the coating material loaded per unit area of the first electrode sheet ES1 and may be an area density of the coating material.

Whether a measured part of the first electrode sheet ES1 is defective or not may be determined by processing the measurement data by a set method. When a measured amount of the coating material on the first electrode sheet ES1 (e.g., the loading amount of the coating material on the first electrode sheet ES1 or a thickness of the first electrode sheet ES1) is in a set range including upper and lower limits, a corresponding part of the first electrode sheet ES1 may be determined as a non-defective. The corresponding part of the first electrode sheet ES1 may be determined as defective, when the measured amount of the coating material on the first electrode sheet ES1 (e.g., the loading amount of the coating material on the first electrode sheet ES1 or the thickness of the first electrode sheet ES1) is less than the lower limit or greater than the upper limit.

The measurement data may be collected by a measuring device. Examples of the measuring device may include a time delay and integration (TDI) camera, a complementary metal oxide semiconductor (CMOS) image sensor, a time-of-flight (TOF) sensor, and the like. The measuring device may include an emitter and a receiver that are configured to perform measurement using non-destructive signals such as ultrasound waves, microwaves, terahertz waves, infrared rays, and the like. The measuring device may include analog and/or digital sensors, such as a biosensor, a chemical sensor, a composition sensor, a current and/or power meter, an air quality sensor, a gas sensor, a hall effect sensor, a brightness level sensor, and an optical sensor. The measuring device may include a pressure sensor, a temperature sensor, an ultrasonic sensor, a proximity sensor, a door state sensor, a motion tracking sensor, a humidity sensor, a visible light and infrared sensor, a camera, etc.

The measuring device may include a processor configured to generate evaluation data based on the measurement data. The evaluation data may be collected based on a comparison between measured values of multiple sections of the first electrode sheet ES1 and the set range.

For example, a measured value (or an average of measured values) that is in a first range may be determined as normal, a measured value (or an average of measured values) that is in a second range greater than the first range may be determined as excessive, a measured value (or an average of measured values) that is in a third range greater than the second range may be determined as very excessive, a measured value (or an average of measured values) that is in a fourth range less than the first range may be determined as insufficient, and a measured value (or an average of measured values) that is in a fifth range less than the fourth range may be determined as very insufficient.

Here, when a lower limit of the second range is greater than or equal to an upper limit of the first range, the second range is greater than the first range. Similarly, when an upper limit of the fourth range is less than or equal to a lower limit of the first range, the fourth range is less than the first range.

Evaluation values of the evaluation data may be related to coordinates. For example, each of the evaluation values may match a start coordinate and an end coordinate of a part of the first electrode sheet ES1 for which the evaluation value is calculated.

The inspection data may be collected by an inspection device. The inspection device may be configured to inspect the first electrode sheet ES1 to collect inspection data of the first electrode sheet ES1. The inspection device may be configured to detect defects, such as a surface defect, of the first electrode sheet ES1, based on a change in a color and reflectivity or etc., of a surface of the first electrode sheet ES1. The inspection device may be configured to collect inspection data of a part (e.g., an overlapping part) of the first electrode sheet ES1 corresponding to a sensing part.

The inspection data collected by the inspection device may include a result of judging the quality of the part of the first electrode sheet ES1 and data about a process event. For example, the inspection data may include data about the appearance of the first electrode sheet ES1 collected by an image-based device such as a machine vision, data about disconnections and joints of the first electrode sheet ES1, data about a part of the first electrode sheet ES1 on which a sampling inspection is performed, data about a part of the first electrode sheet ES1 to be scrapped, data about a scrapped part of the first electrode sheet ES1, data about whether the coating material and the insulating material on the first electrode sheet ES1 are defective or not, data about datum points for marking a position on the first electrode sheet ES1, and defect data about a pinhole defect, a crater defect, a line defect, a crack defect, a side ring defect, an island defect, a fold defect, a wrinkle defect, a pit defect, a scratch defect, and the like. The inspection device may be a color sensor, a joint sensor, a datum point sensor, a machine vision, and the like.

The measurement data and the inspection data described above may be time series data. The measurement data and the inspection data may be temporally ordered. Temporal ordering is a main feature of time series data. Temporal ordering is organizing events in an order in which they occur and arrive to be processed. That is, the measurement data and the inspection data may be stored based on point in times when measurement and inspection are performed, and may be related to time. Accordingly, each of measured values of the measurement data may be matched to time, and each of inspection values of the inspection data may be matched to time.

For example, data of a measured amount (e.g., an amount of loading on the first electrode sheet ES1 or a thickness of the first electrode sheet ES1) may include a series of measured amounts (e.g., the amounts of loading on the first electrode sheet ES1 or thicknesses of the first electrode sheet ES1) and time values related to the series of measured amounts. The measured amounts and the time values may be matched in a one-to-one manner, but are not limited thereto. As another example, the defect data may include a value indicating a defect and a time value related to the value indicating the defect. Here, indicating defects is to be understood to mean that the values include information regarding at least one of the presence of defects and the types of defects.

A roll map may include coordinate-related measurement data and coordinate-related inspection data that are generated by relating measurement data and inspection data, which are time-series data, with coordinate data. Accordingly, the roll map may provide traceability for all processes during performing of a subsequent process or after the shipment of a product.

FIG. 4 illustrates a roll pressing device 200 according to example embodiments.

FIGS. 5 and 6 are plan views of a second electrode sheet ES2.

Referring to FIGS. 4 to 6, the roll pressing device 200 may include an unwinder 211, a rewinder 213, a splicing table 215, a scrap port 217, pressing rolls 219, a first rotary encoder 221, a second rotary encoder 223, a datum point sensor 231, a roll map programmable logic controller (PLC) 241, and a process PLC 243.

The second electrode roll ER2 may be loaded on the unwinder 211. The second electrode roll ER2 may be completed by the coating device 100 and transferred to the roll pressing device 200 by a transfer device. The unwinder 211 may be configured to unwind the second electrode sheet ES2 from the second electrode roll ER2. The rewinder 213 may be configured to wind the second electrode sheet ES2 into a third electrode roll ER3. The second electrode sheet ES2 may be wound into the third electrode roll ER3, and the third electrode roll ER3 may be cut and separated in the transverse direction TD after a certain winding length is reached. Accordingly, the second electrode sheet ES2 may be moved between the unwinder 211 and the rewinder 213.

The first rotary encoder 221 may be configured to sense an amount of the second electrode sheet ES2 unwound from the second electrode roll ER2 by the unwinder 211. Accordingly, the first rotary encoder 221 may be configured to generate an input amount signal UWAS2 indicating a length of the second electrode sheet ES2 unwound by the unwinder 211. The first rotary encoder 221 may be configured to transmit the input amount signal UWAS2 to the roll map PLC 241.

The second rotary encoder 223 may be configured to sense an amount of the second electrode sheet ES2 wound into the third electrode roll ER3 by the rewinder 213. Accordingly, the second rotary encoder 223 may be configured to generate an exhaustion amount signal WAS2 indicating a length of the second electrode sheet ES2 wound by the rewinder 213. The second rotary encoder 223 may be configured to transmit the exhaustion amount signal WAS2 to the roll map PLC 241.

The roll map PLC 241 may be configured to collect coordinate data CD2 of the second electrode sheet ES2, based on the exhaustion amount signal WAS2 and/or the input amount signal UWAS2 of the second electrode sheet ES2. For example, the roll map PLC 241 may determine a moving distance of the second electrode sheet ES2, based on the exhaustion signal WAS2 of the second electrode sheet ES2. Accordingly, the roll map PLC 241 may be configured to determine a position of a part of the second electrode sheet ES2, which is to be wound by the rewinder 213, on the second electrode sheet ES2 at each point in time when an event occurs in the second electrode sheet ES2. Here, the event may include sensing the first to fourth datum points DP1 to DP4 by the datum point sensor 231 and processing the second electrode sheet ES2 by the pressing rolls 219.

As another example, the roll map PLC 241 may determine a moving distance of the second electrode sheet ES2 based on the input amount signal UWAS2 of the second electrode sheet ES2 or based on each of the exhaust amount signal WAS2 and the input amount signal UWAS2. As a non-limiting example, the technical idea of the present disclosure will be described below with reference to an embodiment in which the roll map PLC 241 collects the coordinate data CD2 based on the exhaustion amount signal WAS2 of the second electrode sheet ES2.

The coordinate data CD2 may include coordinates matching each part of the second electrode sheet ES2. That is, arbitrary points on the second electrode sheet ES2 may match coordinates. The coordinates may be 1D quantities in a machine direction MD of the second electrode sheet ES2, but are not limited thereto. The coordinates may be 2D quantities in the machine direction MD of the second electrode sheet ES2 and a Y-axis direction in a transverse direction TD of the second electrode sheet ES2.

The datum point sensor 231 may be configured to sense the first to fourth datum points DP1 to DP4 on the second electrode sheet ES2. The datum point sensor 231 may include a sensing part 231S and a processor 231P. The sensing part 231S and the processor 231P may be connected by wire or wirelessly.

According to example embodiments, the sensing part 231S may include an optical character reader (OCR). The sensing part 231S may be configured to sense the first to fourth datum points DP1 to DP4 to generate a datum point sensing signal DSS1. The sensing part 231S may be configured to transmit the datum point sensing signal DSS1 to the processor 231P.

According to example embodiments, the number of sensing parts 231S may be less than the number of first to fourth uncoated parts U1 to U4. For example, one sensing part 231S may cover four uncoated parts U1 to U4. Accordingly, costs for constructing the datum point sensor 231 may decrease.

The sensing part 231S may be configured to sense one of the first to fourth datum points DP1 to DP4 at a fixed position. According to a loading direction and an unwinding direction of the second electrode roll ER2, the sensing part 231S may be configured to sense the first datum points DP1 on the first uncoated part U1 as shown in FIG. 5 or to sense the fourth datum points DP4 on the fourth uncoated part U4 as shown in FIG. 6.

The sensing part 231S may also be disposed at a position for sensing the second datum points DP2 on the second uncoated part U2 of FIG. 5 or sensing the third datum points DP3 on the third uncoated part U3 of FIG. 6. The sensing part 231S may also be disposed at a position for sensing the third datum points DP3 on the third uncoated part U3 of FIG. 5 or sensing the second datum points DP2 on the second uncoated part U2 of FIG. 6. The sensing part 231S may also be disposed at a position for sensing the fourth datum points DP4 on the fourth uncoated part U4 of FIG. 5 or sensing the first datum points DP1 on the first uncoated part U1 of FIG. 6.

The first to fourth datum points DP1 to DP4 may be formed at the same positions on an upper surface and lower surface of the second electrode sheet ES2 in the machine direction MD. Accordingly, the positions of the first to fourth datum points DP1 to DP4 on each of the upper and lower surfaces of the second electrode sheet ES2 may be determined by sensing the first to fourth datum points DP1 to DP4 on the upper or lower surface of the second electrode sheet ES2.

The processor 231P may be configured to collect datum point data DSD1 based on the datum point sensing signal DSS1 and the coordinate data CD2. The processor 231P may be configured to collect the datum point data DSD1 by matching coordinates of the coordinate data CD2 to a datum point sensing signal DSS1 generated by reading one of the first to fourth datum points DP1 to DP4. Accordingly, the datum point data DSD1 may include a value indicating one of the first to fourth coated lanes L1 to L4 that corresponds to a sensed one among the first to fourth datum points DP1 to DP4, a value indicating a sequence number of the sensed one among the first to fourth datum points DP1 to DP4, and coordinates of the sensed one among the first to fourth datum points DP1 to DP4.

The processor 231P may be configured to calibrate the coordinates of the coordinate data CD2 for matching between the datum point sensing signal DSS1 of one of the first to fourth datum points DP1 to DP4 and the coordinates of the coordinate data CD2. The processor 231P may be configured to calibrate the coordinates of the coordinate data CD2 based on a length of the second electrode sheet ES2 between a part of the second electrode sheet ES2 wound by the rewinder 213 and a part of the second electrode sheet ES2 sensed by the sensing part 231S, and match the calibrated coordinates to the datum point sensing signal DSS1.

The processor 231P may be configured to transmit the datum point data DSD1 to the roll map PLC 241. The roll map PLC 241 may be configured to transmit the datum point data DSD1 to the process PLC 243. The process PLC 243 may be configured to transmit the datum point data DSD1 and additional process event data to the server 1020 (see FIG. 1) via the EIF 1010 (see FIG. 1). The server 1020 (see FIG. 1) may be configured to generate a second roll map of the third electrode roll ER3 processed by the roll pressing device 200, based on the datum point data DSD1 and the additional process event data.

The process PLC 243 may be configured to control operations of the unwinder 211, the rewinder 213, the scrap port 217, and the pressing rolls 219, based on the datum point data DSD1. The process PLC 243 may be configured to generate a signal for operating or stopping the unwinder 211, the rewinder 213, the scrap port 217 and the pressing rolls 219. The signal for operating or stopping the unwinder 211, the rewinder 213, the scrap port 217, and the pressing rolls 219 may be generated based on body including a product ID and specifications of a manufacturing recipe and the datum point data DSD1.

The roll pressing device 200 may additionally include an inspection device and a measuring device, similar to the coating device 100 of FIG. 2. The process PLC 243 may be configured to generate a signal for decreasing a moving speed of the second electrode sheet ES2 or stopping winding or unwinding performed by the unwinder 211 and the rewinder 213, when defect data of a roll map of the second electrode roll ER2 or a defect of the second electrode sheet ES2 identified by the inspection device and the measuring device of the roll pressing device 200 approaches the splicing table 215.

The scrap port 217 may be configured to wind a defective part DES of the second electrode sheet ES2 as indicated by a dashed line, after cutting a start point of the defect (or a point adjacent to the start point when a process margin is taken into account) on the splicing table 215. After the defective part DES of the second electrode sheet ES2 is sufficiently wound by the scrap port 217, a part of the second electrode sheet ES2 connected to the scrap port 217 and a part of the second electrode sheet ES2 connected to the unwinder 211 may be separated. Next, a current process may be continued by connecting the part of the second electrode sheet ES2 connected to the unwinder 211 and the part of the second electrode sheet ES2 connected to the rewinder 213. The part of the second electrode sheet ES2 connected to the unwinder 211 and the part of the second electrode sheet ES2 connected to the rewinder 213 may be connected on the splicing table 215.

A part of the second electrode sheet ES2 passing the splicing table 215 may be pressed by the pressing rolls 219 and thereafter be wound into the third electrode roll ER3 by the rewinder 213.

FIG. 7 illustrates a slitting device 300 according to example embodiments.

FIGS. 8 and 9 are plan views of a third electrode sheet ES3.

Referring to FIGS. 7 to 9, the slitting device 300 may include an unwinder 311, rewinders 313a and 313b, a slitting knife 315, a guide roll 316, a first rotary encoder 321, second rotary encoders 323a and 323b, a datum point sensor 331, a roll map PLC 341, and a process PLC 343.

The third electrode roll ER3 may be loaded on the unwinder 311. The third electrode roll ER3 may be completed by the roll pressing device 200 and transferred to the roll pressing device 200 by a transfer device. The unwinder 311 may be configured to unwind a third electrode sheet ES3 from the third electrode roll ER3. The third electrode sheet ES3 may be cut by the slitting knife 315 to form the individualized electrode sheets ES3a and ES3b. The individualized electrode sheet ES3a may be referred to as a first individualized electrode sheet, and the individualized electrode sheet ES3b may be referred to as a second individualized electrode sheet. Each of the individualized electrode sheet ES3a and the individualized electrode sheets ES3b may include a coated lane. For example, the individualized electrode sheet ES3a may include a first coated lane L1, and the individualized electrode sheet ES3b may include a second coated lane L2. The guide roll 316 may be in a moving path of the individualized electrode sheet ES3b to separate a moving path of the individualized electrode sheet ES3a and the moving path of the individualized electrode sheet ES3b.

For convenience of illustration, FIG. 7 illustrates only the two individualized electrode sheets ES3a and ES3b, but the separation of an electrode sheet may be determined based on the number of coated lanes on the electrode sheet. For example, the third electrode sheet ES3 includes first to fourth coated lanes L1 to L4, and thus may be cut into four individualized electrode sheets.

The rewinders 313a and 313b may be configured to wind the individualized electrode sheets ES3a and ES3b into individualized electrode rolls ER4a and ER4b. The individualized electrode sheets ES3a and ES3b may be wound into the individualized electrode rolls ER4a and ER4b, and the individualized electrode rolls ER4a and ER4b may be cut and separated in the transverse direction TD after a target winding amount is reached. The individualized electrode roll ER4a may be referred to as a first individualized electrode roll, and the individualized electrode roll ER4b may be referred to as a second individualized electrode roll.

The first rotary encoder 321 may be configured to sense the amount of the third electrode sheet ES3 unwound from the third electrode roll ER3 by the unwinder 311. Accordingly, the first rotary encoder 321 may be configured to generate an input amount signal UWAS3 indicating a length of the third electrode sheet ES3 unwound by the unwinder 311. The first rotary encoder 321 may be configured to transmit the input amount signal UWAS3 to the roll map PLC 341.

The second rotary encoders 323a and 323b may be configured to sense the amount of the third electrode sheet ES3 wound into the individualized electrode rolls ER4a and ER4b by the rewinders 313a and 313b. Accordingly, the second rotary encoders 323a and 323b may be configured to generate exhaustion amount signals WAS3a and WAS3b indicating lengths of the individualized electrode sheets ES3a and ES3b wound by the rewinders 313a and 313b. The second rotary encoders 323a and 323b may be configured to transmit the exhaustion amount signals WAS3a and WAS3b to the roll map PLC 341.

The roll map PLC 341 may be configured to collect coordinate data CD3a of the electrode sheet ES3a and coordinate data CD3b of the electrode sheet ES3b, based on the input amount signal UWAS3 of the third electrode sheet ES3 and/or the exhaustion amount signals WAS3a andWAS3b of the individualized electrode sheets ES3a and ES3b.

For example, the roll map PLC 341 may determine moving distances of the individualized electrode sheet ES3a and ES3b, based on the exhaustion amount signals WAS3a and WAS3b of the third electrode sheet ES3. Accordingly, the roll map PLC 341 may be configured to determine positions of parts of the individualized electrode sheets ES3a and ES3b, which are wound by the rewinders 313a and 313b, on the individualized electrode sheets ES3a and ES3b at each point in time when an event occurs in the individualized electrode sheets ES3a and ES3b. Here, the event in the slitting device 300 may include sensing of one of the first to fourth datum points DP1 to DP4.

As another example, the roll map PLC 341 may determine moving distances of the individualized electrode sheet ES3a and ES3b based on the input amount signal UWAS3 of the third electrode sheet ES3 or based on each of the exhaust amount signals WAS3a and WAS3b and the input amount signal UWAS3. As a non-limiting example, the technical idea of the present disclosure will now be described with reference to an embodiment in which the roll map PLC 341 collects the coordinate data CD3a and CD3b based on the exhaustion amount signals WAS3a and WAS3b of the individualized electrode sheets ES3a and ES3b.

The coordinate data CD3a and CD3b may include coordinates matching each of parts of the individualized electrode sheets ES3a and ES3b. That is, each arbitrary point on the individualized electrode sheets ES3a and ES3b may match coordinates. The coordinates may be 1D quantities in the machine direction MD of the individualized electrode sheets, but are not limited thereto. The coordinates may be 2D quantities in the machine direction MD of the individualized electrode sheets ES3a and ES3b and the Y-axis direction in the transverse direction TD of the individualized electrode sheets ES3a and ES3b.

The datum point sensor 331 may be configured to sense one of the first to fourth datum points DP1 to DP4 on the third electrode sheet ES3. The datum point sensor 331 may include a sensing part 331S and a processor 331P. The sensing part 331S and the processor 331P may be connected by wire or wirelessly.

According to example embodiments, the sensing part 331S may include an OCR. The sensing part 331S may be configured to sense the first to fourth datum points DP1 to DP4 to generate a datum point sensing signal DSS2. The sensing part 331S may be configured to transmit the datum point sensing signal DSS3 to the processor 331P.

According to example embodiments, the number of sensing parts 331S may be less than the number of the first to fourth uncoated parts U1 to U4. For example, one sensing part 231S may cover the four uncoated parts U1 to U4. Accordingly, costs for constructing the datum point sensor 331 may decrease.

The sensing part 331S may be configured to sense one of the first to fourth datum points DP1 to DP4 at a fixed position. According to a direction in which the third electrode roll ER3 is loaded and a direction in which the third electrode sheet ES3 is unwound, the sensing part 331S may be configured to sense the first datum points DP1 on the first uncoated part U1 as shown in FIG. 8 or to sense the fourth datum points DP4 on the fourth uncoated part U4 as shown in FIG. 9.

The sensing part 331S may be disposed at a position for sensing the second datum points DP2 on the second uncoated part U2 of FIG. 8 or sensing the third datum points DP3 on the third uncoated part U3 of FIG. 9. The sensing part 331S may be disposed at a position for sensing the third datum points DP3 on the third uncoated part U3 of FIG. 8 or sensing the second datum points DP2 on the second uncoated part U2 of FIG. 9. The sensing part 331S may be disposed at a position for sensing the fourth datum points DP4 on the fourth uncoated part U4 of FIG. 8 or sensing the first datum points DP1 on the first uncoated part U1 of FIG. 9.

As described above, the positions of the first to fourth datum points DP1 to DP4 on each of upper and lower surfaces of the third electrode sheet ES3 may be determined by sensing the first to fourth datum points DP1 to DP4 on the upper or lower surface of the third electrode sheet ES3.

The processor 331P may be configured to collect datum point data DSD2 based on the datum point sensing signal DSS2 and coordinate data CD3. The processor 331P may be configured to collect the datum point data DSD2 by matching coordinates of the coordinate data CD3 to the datum point sensing signal DSS2 generated by reading one of the first to fourth datum points DP1 to DP4. Accordingly, the datum point data DSD2 may include a value indicating one of the first to fourth coated lanes L1 to L4 that corresponds to a sensed one among the first to fourth datum points DP1 to DP4, a value indicating a sequence number of the sensed one among the first to fourth datum points DP1 to DP4, and coordinates of the sensed one among the first to fourth datum points DP1 to DP4.

The processor 331P may be configured to calibrate the coordinates of the coordinate data CD3 for matching between the datum point sensing signal DSS2 of one of the first to fourth datum points DP1 to DP4 and the coordinates of the coordinate data CD3. The processor 331P may be configured to calibrate the coordinates of the coordinate data CD3 based on a length of the third electrode sheet ES3 between a part of the third electrode sheet ES3 wound by the rewinder 313 and a part of the third electrode sheet ES3 sensed by the sensing part 331S and to match the calibrated coordinates to the datum point sensing signal DSS2.

The processor 331P may be configured to transmit the datum point data DSD2 to the roll map PLC 341. The roll map PLC 341 may be configured to transmit the datum point data DSD2 to the process PLC 343. The process PLC 343 may be configured to transmit the datum point data DSD2 and additional process event data to the server 1020 (see FIG. 1) via the EIF 1010 (see FIG. 1). The server 1020 (see FIG. 1) may be configured to generate third roll maps of the individualized electrode rolls ER4a and ER4b processed by the slitting device 300, based on the datum point sensing data DSD2 and the additional process event data.

The process PLC 343 may be configured to transmit the datum point data DSD2 and additional process event data to the server 1020 (see FIG. 1) via the EIF 1010 (see FIG. 1). The server 1020 (see FIG. 1) may be configured to generate third roll maps of the individualized electrode rolls ER4a and ER4b processed by the slitting device 300, based on the datum point sensing data DSD2 and the additional process event data.

Referring to FIGS. 1, 2, 4, and 7, the controller 119, the processors 231P and 331P, the roll map PLCs 141, 241, and 341, the process PLCs 143, 243, and 343, the EIF 1010, and the server 1020 may be implemented by hardware, firmware, software, or a combination thereof. For example, the controller 119, the processors 231P and 331P, the roll map PLCs 141, 241, and 341, the process PLCs 143, 243, and 343, the EIF 1010, and the server 1020 may include computing devices such as workstation computers, desktop computers, laptop computers, and tablet computers. The controller 119, the processors 231P and 331P, the roll map PLCs 141, 241, and 341, the process PLCs 143, 243, and 343, the EIF 1010, and the server 1020 may include one of a simple controller, a complex processor such as a microprocessor, a CPU, or a GPU, a processor configured by software, dedicated hardware, and firmware. The controller 119, the processors 231P and 331P, the roll map PLCs 141, 241, and 341, the process PLCs 143, 243, and 343, the EIF 1010, and the server 1020 may be implemented by, for example, a general-purpose computer or application-specific hardware such as a digital signal processor (DSP), a field programmable gate array (FPGA) and an application-specific integrated circuit (ASIC).

The server 1020 may include a physical server or a cloud server. The server 1020 may provide data and an analysis result to an operator through various frameworks. The frameworks may include a protocol that supports data transmission to provide updated visualizations when the display device 1030 visualizes data through a user interface and new data is computed by the server 1020. The protocol that supports data transmission may employ HTML, JavaScript, and/or JSON.

The server 1020 may include various types of application programming interfaces (APIs) for storing data in a database and other data management tools. The APIs may also be used to retrieve data from databases of various data management systems. The data management systems may provide access to a database, pull or retrieve data from the database, and generate metrics. Here, the metrics are a tool for visualizing data. The metrics may include measured values generated in a time-series manner and be used to monitor applications and generate a status warning.

The server 1020 may be configured to generate a first roll map of the second electrode roll ER2 completed by the coating device 100, a second roll map of the third electrode roll ER3 completed by the roll pressing device 200, and third roll maps of the individualized electrode rolls ER4a and ER4b completed by the slitting device 300. The first roll map may include offset data OFD, and the second and third roll maps may be generated based on the offset data OFD.

The first server 1210 may transmit a visualization command VC to the display device 1300, and the display device 1300 may visualize and display the first to third roll maps. The first to third roll maps described above may be displayed on the display device 1030. The first to third roll maps may be aligned in one direction, thus facilitating tracking of process history.

Referring to FIGS. 1 and 4 to 6, the datum point data DSD1 may be generated by sensing one of the first to fourth datum points DP1 to DP4 (e.g., the first datum points DP1). The server 1020 may be configured to generate datum point data indicating coordinates of the second to fourth datum points DP2, DP3, and DP4, based on the datum point data DSD1 and the offset data OFD (see FIG. 2). The datum point data of the second to fourth datum points DP2, DP3, and DP4 may include a value indicating a sequence number of each of the second to fourth datum points DP2, DP3, and DP4 and coordinates matching the value indicating the sequence number.

According to example embodiments, coordinates of unsensed datum points (e.g., the second to fourth datum points DP2, DP3, and DP4) may be calculated by performing operations on sensed datum points (e.g., the first datum points DP1) and the offset data OFD (see FIG. 2). The operations may include subtraction and addition.

As shown in FIG. 5, when the first datum points DP1 are sensed, the coordinates of the second datum points DP2 may be calculated by subtracting the offset OF1 from the coordinates of the first datum points DP1, the coordinates of the third datum points DP3 may be calculated by subtracting the offset OF2 from the coordinates of the first datum points DP1, and the coordinates of the fourth datum points DP4 may be calculated by subtracting the offset OF3 from the coordinates of the first datum points DP1.

As shown in FIG. 6, when the fourth datum points DP4 are sensed, the coordinates of the first datum points DP1 may be calculated by adding the offset OF3 to the coordinates of the first datum points DP1, the coordinates of the second datum points DP2 may be calculated by subtracting the offset OF1 from the coordinates of the first datum points DP1, and the coordinates of the third datum points DP3 may be calculated by subtracting the offset OF2 from the coordinates of the first datum points DP1.

As described above, the server 1020 may be configured to generate datum point data of unsensed datum points among the first to fourth datum points DP1 to DP4, based on the datum point data DSD1 of sensed datum points among the first to fourth datum points DP1 to DP4 and the offset data OFD (see FIG. 2). The datum point data DSD1 may be referred to as first datum point data, and the datum point data of the unsensed datum points among the first to fourth datum points DP1 to DP4 may be referred to as second datum point data. The server 1020 may be configured to generate the third roll maps of the third electrode roll ER3 completed by the roll pressing process, based on the first datum point data and the second datum point data.

Referring to FIGS. 1 and 7 to 9, the datum point data DSD2 may be generated by sensing one of the first to fourth datum points DP1 to DP4 (e.g., the first datum points DP1). The server 1020 may be configured to generate datum point data indicating the coordinates of the second to fourth datum points DP2, DP3, and DP4, based on the datum point data DSD2 and the offset data OFD (see FIG. 2). The datum point data of the second to fourth datum points DP2, DP3, and DP4 may include a value indicating a sequence number of each of the second to fourth datum points DP2, DP3, and DP4 and coordinates matching the value indicating the sequence number.

As shown in FIG. 8, when the first datum points DP1 are sensed, the coordinates of the second datum points DP2 may be calculated by adding the offset OF1 to the coordinates of the first datum points DP1, the coordinates of the third datum points DP3 may be calculated by adding the offset OF2 to the coordinates of the first datum points DP1, and the coordinates of the fourth datum points DP4 may be calculated by adding the offset OF3 to the coordinates of the first datum points DP1.

As shown in FIG. 9, when the fourth datum points DP4 are sensed, the coordinates of the first datum points DP1 may be calculated by subtracting the offset OF3 from the coordinates of the first datum points DP1, the coordinates of the second datum points DP2 may be calculated by adding the offset OF1 to the coordinates of the first datum points DP1, and the coordinates of the third datum points DP3 may be calculated by subtracting the offset OF2 from the coordinates of the first datum points DP1.

As described above, the server 1020 may be configured to generate datum point data of unsensed datum points among the first to fourth datum points DP1 to DP4, based on the datum point data DSD2 of sensed datum points among the first to fourth datum points DP1 to DP4 and the offset data OFD. The datum point data DSD2 may be referred to as third datum point data, and the datum point data of the unsensed datum points among the first to fourth datum points DP1 to DP4 may be referred to as fourth datum point data. The server 1020 may be configured to generate the third roll maps of the individualized electrode rolls ER4a and ER4b completed by the slitting device 300, based on the third datum point data and the fourth datum point data.

The third roll maps may include data of a corresponding one among the first to fourth coated lanes L1 to L4. For example, the third roll map of the individualized electrode roll ER4a may include data indicating the first coated lane L1, and the third roll map of the individualized electrode roll ER4b may include data indicating the second coated lane L2. Each of the individualized electrode rolls ER4a and ER4b includes only a single coated lane after being individualized by the slitting device 300. However, the third roll maps each include data indicating the coated lane corresponding thereto, and thus the traceability in the secondary battery manufacturing process may be improved.

When the datum point data DSD2 is generated by sensing the first datum points DP1, a third roll map of an individualized electrode roll including the first uncoated part U1 and the first coated lane L1 may be generated based on the datum point data DSD2 of the first datum points DP1, a third roll map of an individualized electrode roll including the second uncoated part U2 and the second coated lane L2 may be generated based on datum point data of the second datum points DP2 generated based on the datum point data DSD2 and the offset data OFD, a third roll map of an individualized electrode roll including the third uncoated part U3 and the third coated lane L3 may be generated based on datum point data of the third datum points DP3 generated based on the datum point data DSD2 and the offset data OFD, and a third roll map of an individualized electrode roll including the fourth uncoated part U4 and the fourth coated lane L4 may be generated based on datum point data of the fourth datum points DP4 generated based on the datum point data DSD2 and the offset data OFD.

Referring back to FIGS. 1, 2, 4 and 7, a plug-in architecture may be implemented by the secondary battery manufacturing system 10 together with an API for obtaining data to provide plug-and-play connectivity of a sensor, a measuring device, and an inspection device. Accordingly, resources in a certain process step and a specific site may be easily transferred to a different process and a different site or new resources may be easily introduced into each process step and each site.

In some embodiments, the secondary battery manufacturing system 10 may further include a manual input system that allows an operator to input manufacturing data. The secondary battery manufacturing system 10 may allow data to be input by an operator with an input tool and a computer-based input of manufacturing data such as Excel file scraping. The manual input system may be, for example, human-machine interfaces (HMI) of supervisory control and data acquisition (SCADA). Generally, SCADA may include a combination of software and hardware, such as a PLC and remote terminal units (RTUs). HMI is a screen that supports communication between an operator and an SCADA system and is a key element of the SCADA system. For example, manual input by HMI may include selecting a defective type and reflecting performance at the time of completion.

According to some embodiments, the operations of the controller 119, the processors 231P and 331P, the roll map PLCs 141, 241, and 341, the process PLCs 143, 243, and 343, the EIF 1010, and the server 1020 may be implemented by instructions stored in a machine-readable medium that is readable and executable by one or more processors. Here, the machine-readable medium may include an arbitrary mechanism for storing and/or transmitting information in a form readable by a machine (e.g., a computing device). Examples of the machine-readable medium may include a read-only memory (ROM), a random access memory (RAM), a magnetic disk storage medium, an optical storage medium, a flash memory, electrical, optical, acoustic or other types of radio signals (e.g., carrier waves, infrared signals, digital signals, etc.), and other signals.

The controller 119, the processors 231P and 331P, the roll map PLCs 141, 241, and 341, the process PLCs 143, 243, and 343, the EIF 1010, and the server 1020 may include firmware, software, routines, and instructions for performing the above-described operations or processes described below. For example, the controller 119, the processors 231P and 331P, the roll map PLCs 141, 241, and 341, the process PLCs 143, 243, and 343, the EIF 1010, and the server 1020 may be instantiated in a memory.

### (Second Embodiment)

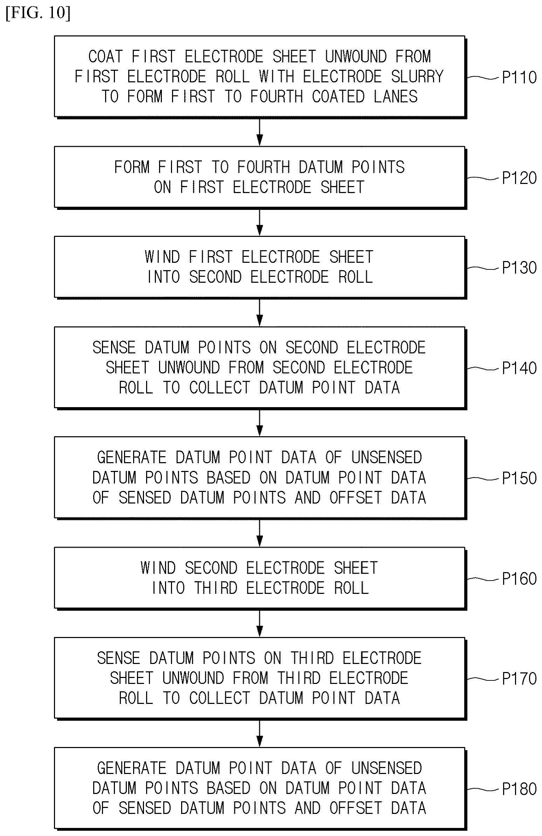

FIG. 10 is a flowchart of a method of manufacturing a secondary battery according to example embodiments.

Referring to FIGS. 2, 3, and 10, in P110, the first electrode sheet ES1 unwound from the first electrode roll ER1 may be coated with an electrode slurry to form first to fourth coated lanes L1 to L4 on the first electrode sheet ES1. The first electrode sheet ES1 may be coated with the electrode slurry by the die coater 115 of the coating device 100.

Next, in P120, first to fourth datum points DP1 to DP4 may be formed on the first electrode sheet ES1. The first to fourth datum points DP1 to DP4 may be formed by the markers 117a and 117b.

Next, in P130, the first electrode sheet ES1 may be wound into the second electrode roll ER2. The second electrode roll ER2 may be wound by the rewinder 113.

Referring to FIGS. 4 to 6 and 10, in P140, datum points (e.g., the first datum points DP1) on the second electrode sheet ES2 unwound from the second electrode roll ER2 may be sensed to collect the datum point data DSD1. In order to unwind the second electrode sheet ES2 from the second electrode roll ER2, the second electrode roll ER2 completed by the coating device 100 (see FIG. 2) may be transferred to the roll pressing device 200 and loaded on the unwinder 211. The second electrode sheet ES2 may be unwound from the second electrode roll ER2 by the unwinder 211.

The collecting of the datum point data DSD1 may include sensing datum points (e.g., the first datum points DP1) on the second electrode sheet ES2 to generate the datum point sensing signal DSS1, calibrating coordinates of coordinate data CD2, and matching the calibrated coordinates to the datum point sensing signal DSS1. The datum point data DSD1 may be collected by the datum point sensor 231. In P140, the second to fourth datum points DP2, DP3, and DP4 may be sensed instead of the first datum points DP1 to collect the datum point data DSD1.

Referring to FIGS. 1, 4 to 6, and 10, in P150, datum point data of each of unsensed datum points (e.g., the second to fourth datum points DP2, DP3, and DP4) may be generated based on the datum point data DSD1 of the sensed datum points (e.g., the first datum points DP1) and the offset data OFD (see FIG. 2). The datum point data of each of the second to fourth datum points DP2, DP3 and DP4 may be generated by the server 1020. Next, a roll map of the third electrode roll ER3 completed by the roll pressing device 200 may be generated based on the datum point data DSD1 of the sensed datum points (e.g., the first datum points DP1) and the datum point data of each of the unsensed datum points (e.g., the second to fourth datum points DP2, DP3, and DP4).

Next, in P160, the second electrode sheet ES2 may be wound into the third electrode roll ER3. The third electrode roll ER3 may be wound by the rewinder 213

Referring to FIGS. 1 and 7 to 10, in P170, datum points (e.g., first datum points DP1) on the third electrode sheet ES3 unwound from the third electrode roll ER3 may be sensed to collect the datum point data DSD2. In order to unwind the third electrode sheet ES3 from the third electrode roll ER3, the third electrode roll ER3 completed by the roll pressing device 200 (see FIG. 4) may be transferred to the slitting device 300 and loaded on the unwinder 311. The third electrode sheet ES3 may be unwound from the third electrode roll ER3 by the unwinder 311.

The collecting of the datum point data DSD2 may include sensing datum points (e.g., the first datum points DP1) on the third electrode sheet ES3 to generate the datum point sensing signal DSS2, calibrating coordinates of coordinate data CD2, and matching the calibrated coordinates to the datum point sensing signal DSS2. The datum point data DSD2 may be collected by the datum point sensor 331. In P170, the second to fourth datum points DP2, DP3, and DP4 may be sensed instead of the first datum points DP1 to collect the datum point data DSD2.

Referring to FIGS. 1, 4 to 6, and 10, in P180, datum point data of each of unsensed datum points (e.g., the second to fourth datum points DP2, DP3, and DP4) may be generated based on the datum point data DSD2 of the sensed datum points (e.g., the first datum points DP1) and the offset data OFD (see FIG. 2). The datum point data of each of the second to fourth datum points DP2, DP3 and DP4 may be generated by the server 1020. Next, third roll maps of the individualized electrode rolls ER4a and ER4b completed by the slitting device 300 may be generated based on the datum point data DSD2 of the sensed datum points (e.g., the first datum points DP1) and the datum point data of each of the unsensed datum points (e.g., the second to fourth datum points DP2, DP3, and DP4). One of the third roll maps may include the datum point data DSD2 of the first datum points DP1, another of the third roll maps may include the datum point data of the second datum points DP2, another of the third roll maps may include the datum point data of the third datum points DP3, and the other one of the third roll maps may include the datum point data of the fourth datum points DP4.

The present disclosure has been described above in more detail with reference to the drawings, the embodiments, etc. However, the configurations illustrated in the drawings or embodiments described in the present specification are only embodiments of the present disclosure and do not reflect all the technical ideas of the present disclosure, and thus it should be understood that various equivalents and modifications that replace the configurations would have been made at the filing date of the present application.

## Claims

1. A roll map generating method comprising:
coating a first electrode sheet unwound from a first electrode roll with an electrode slurry to form a first coated lane, a second coated lane, a first uncoated part and a second uncoated part;
forming a first datum point on the first uncoated part and a second datum point on the second uncoated part;
winding the first electrode sheet into a second electrode roll;
sensing the first datum point on a second electrode sheet unwound from the second electrode roll to collect first datum point data indicating a coordinate of the first datum point on the second electrode sheet; and
generating second datum point data based on the first datum point data, the second datum point data indicating a coordinate of the second datum point on the second electrode sheet.

2. The roll map generating method of claim 1, wherein each of the first and second datum points includes a first symbol indicating an orientation of the first or second datum point, a second symbol indicating a corresponding one of the first and second coated lanes, and a third symbol indicating a sequence number in which the first and second datum points are formed.

3. The roll map generating method of claim 1, wherein each of the first and second datum points includes four symbols.

4. The roll map generating method of claim 1, wherein the forming of the first datum point on the first uncoated part and the second datum point on the second uncoated part includes collecting offset data including an offset that is a length of the first electrode sheet in a machine direction between the first datum point and the second datum point.

5. The roll map generating method of claim 4, wherein the second datum point data is generated based on the first datum point data and the offset data.

6. The roll map generating method of claim 5, wherein the coordinate of the second datum point on the second electrode sheet is calculated by performing an operation on the coordinate of the first datum point on the second electrode sheet and the offset.

7. The roll map generating method of claim 6, wherein the operation includes subtraction or addition.

8. The roll map generating method of claim 4, further comprising:
winding the second electrode sheet into a third electrode roll;
sensing the first datum point on a third electrode sheet unwound from the third electrode roll to collect third datum point data indicating a coordinate of the first datum point on the third electrode sheet; and
generating fourth datum point data based on the third datum point data, the fourth datum point data indicating a coordinate of a third datum point on the third electrode sheet.

9. The roll map generating method of claim 8, wherein the fourth datum point data is generated based on the third datum point data and the offset data.

10. The roll map generating method of claim 8, wherein the coordinate of the second datum point on the third electrode sheet is calculated by performing an operation on the coordinate of the first datum point on the third electrode sheet and the offset.

11. The roll map generating method of claim 8, further comprising:
cutting the third electrode sheet into a first individualized electrode sheet and a second individualized electrode sheet, the first individualized electrode sheet including the first coated lane and the first uncoated part and the second individualized electrode sheet including the second coated lane and the second uncoated part; and
winding the first individualized electrode sheet into a first individualized electrode roll and winding the second individualized electrode sheet into a second individualized electrode roll.

12. The roll map generating method of claim 11, further comprises generating roll maps of the first and second individualized electrode rolls based on the third datum point data and the fourth datum point data.

13. The roll map generating method of claim 12, wherein each of the roll maps of the first and second individualized electrode rolls includes data about a corresponding one of the first coated lane and the second coated lane.

14. The roll map generating method of claim 1, wherein the first datum point and the second datum point are formed by the same marker.

15. The roll map generating method of claim 1, wherein the first datum point is formed by a first marker and the second datum point is formed by a second marker.
